(19) Europäisches Patentamt / European Patent Office / Office européen des brevets

(11) **EP 2 852 564 B1**

(12) # FASCICULE DE BREVET EUROPEEN

(45) Date de publication et mention de la délivrance du brevet:
**15.05.2019 Bulletin 2019/20**

(21) Numéro de dépôt: **13729986.3**

(22) Date de dépôt: **17.05.2013**

(51) Int Cl.:
**C04B 33/14** (2006.01)  **C04B 35/10** (2006.01)
**C09C 1/00** (2006.01)  **C09C 1/40** (2006.01)

(86) Numéro de dépôt international:
**PCT/FR2013/051090**

(87) Numéro de publication internationale:
**WO 2013/175111 (28.11.2013 Gazette 2013/48)**

(54) **UTILISATION D'ALUMINE EN TANT QU'AGENT OPACIFIANT DANS LA FABRICATION DE PRODUITS CERAMIQUES, ET EN PARTICULIER DE CARRELAGES**

VERWENDUNG VON ALUMINIUMOXID ALS TRÜBUNGSMITTEL BEI DER HERSTELLUNG VON KERAMIKPRODUKTEN, INSBESONDERE FLIESEN

USE OF ALUMINA AS AN OPACIFYING AGENT IN THE MANUFACTURE OF CERAMIC PRODUCTS, PARTICULARLY TILES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.05.2012 FR 1254584**

(43) Date de publication de la demande:
**01.04.2015 Bulletin 2015/14**

(73) Titulaire: **ALTEO GARDANNE**
**13120 Gardanne (FR)**

(72) Inventeurs:
• **MARTINEZ, Nathalie**
**13700 Marignane (FR)**
• **PAPIN, Eric**
**84600 Richerenches (FR)**

(74) Mandataire: **Sarlin, Laure V.**
**Cabinet Beau de Loménie**
**51, avenue Jean-Jaurès**
**BP 7073**
**69301 Lyon Cedex 07 (FR)**

(56) Documents cités:
WO-A2-2011/030366  BE-A- 665 390
GB-A- 1 286 003  US-A- 2 474 636

• RICCERI R ET AL: "Ceramic pigments obtained by sol-gel techniques and by mechanochemical insertion of color centers in Al2O3 host matrix", JOURNAL OF THE EUROPEAN CERAMIC SOCIETY, ELSEVIER SCIENCE PUBLISHERS, BARKING, ESSEX, GB, vol. 22, no. 5, 1 mai 2002 (2002-05-01), pages 629-637, XP004334184, ISSN: 0955-2219, DOI: 10.1016/S0955-2219(01)00376-4
• DONDI ET AL: "Gray-blue Al2O3-MoOx ceramic pigments: Crystal structure, colouring mechanism and performance", DYES AND PIGMENTS, ELSEVIER APPLIED SCIENCE PUBLISHERS. BARKING, GB, vol. 76, no. 1, 11 juillet 2007 (2007-07-11), pages 179-186, XP022150290, ISSN: 0143-7208, DOI: 10.1016/J.DYEPIG.2006.08.021

Remarques:
Le dossier contient des informations techniques présentées postérieurement au dépôt de la demande et ne figurant pas dans le présent fascicule.

**Description**

La présente invention concerne le domaine des céramiques, et en particulier des carrelages. Plus précisément, l'invention a pour objet l'utilisation d'une alumine spécifique pour obtenir un effet opacifiant satisfaisant lors de la conception de produits céramiques.

Dans de nombreux produits céramiques, c'est-à-dire des produits obtenus par traitement thermique de différents mélanges d'oxyde et notamment d'oxyde métallique et/ou de silice, il est nécessaire d'utiliser des matières opacifiantes pour plusieurs raisons. C'est notamment, le cas pour la conception des porcelaines, des émaux sanitaires et des carrelages, et notamment des carrelages tels que les grès (en anglais « stoneware »), grès porcelainés (en anglais « porcelain stoneware ») et porcellanato qui trouvent principalement applications dans les carrelages de sol et muraux.

Un carrelage est, le plus souvent, constitué de trois parties: une masse, jouant le rôle de carreau support, un engobe déposé sur la masse et un émail déposé sur l'engobe. L'engobe a un double rôle : opacifier pour masquer la couleur du carreau support, et rendre le carrelage imperméable pour éviter que l'eau ne remonte en surface du carrelage. L'engobe constitue également une couche intermédiaire qui permet d'éviter que des interactions chimiques se produisent entre l'émail et la masse.

L'émail, quant à lui, a pour rôle essentiel d'apporter la décoration. L'émail constituant la surface supérieure du carrelage, outre d'apporter la décoration, se doit également d'être particulièrement résistant aux taches, à l'abrasion, ainsi qu'aux chocs mécaniques.

Certains carrelages ne sont constitués que d'une masse. Dans ce cas, la masse doit également être particulièrement résistante aux taches, à l'abrasion et aux chocs mécaniques.

Dans tous les cas, un agent opacifiant est utilisé dans toutes les parties constitutives du carrelage.

Dans les carrelages constitués uniquement d'une masse, l'agent opacifiant a également pour rôle d'apporter la blancheur au carrelage. Dans l'engobe, l'agent opacifiant a pour rôle essentiel d'opacifier. Dans l'émail, l'agent opacifiant a pour rôle essentiel d'opacifier et d'apporter de la blancheur.

Le principal agent opacifiant utilisé à ce jour dans les produits céramiques tels que les carrelages est le zircon $ZrSiO_4$. L'indice de réfraction très élevé (1,92) du zircon en fait un agent opacifiant de choix. Les carrelages de type grès ont des compositions à base d'argile, de feldspath et de quartz. L'usage d'un agent opacifiant tel que le zircon est avant tout nécessaire pour les grès blancs, qui contiennent également souvent du kaolin, qui apporte lui-même de la blancheur. A titre d'exemple, les carreaux dits ultra blancs (« ultrawhite ») contiennent de 5 à 8 % de zircon, les super blancs (« superwhite ») 3 à 5%, les blancs (« white ») de 1 à 3% de zircon. Dans les engobes et émaux, les compositions peuvent contenir typiquement entre 8 et 15% de zircon.

L'utilisation d'opacifiant du type zircon est également nécessaire dans les émaux des céramiques pour le sanitaire et des céramiques de table.

Cependant, l'utilisation du zircon est aujourd'hui fortement remise en cause, du fait de son prix devenu très élevé sous l'effet du déséquilibre entre l'offre et la demande. A titre d'illustration, ce prix a été multiplié par trois en quatre ans et représente une forte contrainte pour les fabricants de produits céramiques. Il existe donc un très fort intérêt à trouver une solution de remplacement.

Un autre oxyde qui aurait pu être envisagé en tant qu'agent opacifiant, du fait de son indice de réfraction, est le dioxyde de titane. Cependant, il y a aussi pénurie sur le marché pour le dioxyde de titane et son coût est très élevé.

Concernant l'utilisation de l'alumine dans des compositions céramiques, Il convient de citer la demande de brevet WO 2011/030366 qui décrit un procédé pour recycler le verre des tubes cathodiques, dans lequel ce verre est incorporé dans une composition de céramique. L'ajout de verre ayant pour conséquence d'augmenter la fusibilité de la composition, et d'augmenter sa transparence, il est préconisé d'utiliser de l'alumine, en tant qu'agent opacifiant, pour compenser ces deux phénomènes. Dans ces compositions particulières, qui contiennent entre 10 et 50% massique de verre issu de tube cathodique, le taux d'agent opacifiant préféré est de 15 à 25% massique. Cette demande de brevet ne décrit nullement l'alumine utilisée, et ne précise pas les caractéristiques préférées qu'elle devrait présenter pour obtenir l'effet opacifiant souhaité.

L'alumine est utilisée comme agent opacifiant dans US 2474636 pour la fabrication d'un émail pour une porcelaine.

L'alumine a également été utilisée, non pas pour servir d'agent opacifiant, mais en tant que pigment. C'est notamment le cas dans les documents GB 1286003 et dans les publications de Journal of the European Ceramic Society, vol. 22, n°5, 2002, pages 631-633 et de Dyes and Pigments, vol. 76, n°1, 2007, pages 179-186.

Dans le cadre de l'invention, les inventeurs se sont intéressés à l'utilisation de l'alumine $Al_2O_3$, en tant qu'agent opacifiant, dans la conception de produits céramiques tels que les carrelages.

L'indice de réfraction de l'alumine qui est de 1,7 ne faisait pas de l'alumine un bon candidat pour jouer le rôle d'agent opacifiant, mais les inventeurs ont mis en évidence qu'en sélectionnant une alumine particulière, il était possible d'améliorer son pouvoir opacifiant et même dans certains cas d'obtenir un effet opacifiant comparable à celui du zircon.

Dans ce contexte, la présente invention concerne l'utilisation dans une composition soumise à une opération de frittage pour la fabrication d'un produit céramique, de particules d'alumine $Al_2O_3$, pour obtenir un effet opacifiant dans ledit produit céramique, lesdites particules d'alumine $Al_2O_3$ utilisées présentant un % massique en alumine alpha inférieur à 96% et une surface spécifique mesurée sous azote par la technique Brunauer, Emmett et Teller (BET) supérieure ou égale à 1 m$^2$/g.

L'utilisation de l'alumine en tant qu'agent opacifiant, visée dans le cadre de l'invention, est à distinguer de l'utilisation d'un composé en tant que pigment.

En effet, un pigment colore une céramique alors que dans le cadre de l'invention, l'alumine est utilisée pour opacifier le produit céramique, donc pour le rendre opaque, c'est-à-dire qu'elle va permettre de créer une opposition au passage de la lumière.

Les alumines pouvant être utilisées dans le cadre de l'invention peuvent, avantageusement, être préparées grâce à un procédé utilisant les étapes principales suivantes et qui est nommé procédé Bayer du nom de son inventeur :

- attaque chimique à la soude en température et pression de la bauxite pour dissoudre l'alumine contenue dans la bauxite,
- séparation de l'alumine dissoute dans la solution de soude des autres constituants,
- précipitation d'alumine hydrate à partir de l'alumine dissoute dans la solution de soude,
- calcination de l'hydrate d'alumine obtenu à plus ou moins haute température. Lors de cette étape de calcination, l'alumine est déshydratée, le taux de soude résiduel diminue, et l'alumine cristallise selon différentes phases cristallographiques en fonction de la température et du temps de calcination utilisé,
- broyage si besoin, pour réduire la taille des grains.

Pour plus de détails sur un tel procédé, on peut, par exemple, se référer à « Alumina Chemicals, Science & Technology Handbook », LD. Hart Editor, Mars 2006 et B. Castel, « Les alumines et leurs applications », Aluminium Pechiney, Techno Nathan, 1990.

L'alumine alpha est la phase cristallographique de l'alumine la plus stable. L'alumine alpha correspond au stade ultime de la décomposition thermique des hydroxydes d'aluminium quels qu'ils soient, en pur oxyde $Al_2O_3$ cristallin. Elle se définit par sa structure cristallographique dans laquelle les atomes d'oxygène sont ordonnés en un empilement hexagonal compact, et se caractérise facilement par diffraction des rayons X. En particulier, l'alumine alpha est caractérisée en diffraction des rayons X (DRX) par la présence de pics dont les principaux correspondent à des valeurs de $2\theta$ égales à 29,8° (d=3,48 Å), 41,0° (d=2,55 Å), 50,8° (d=2,09 Å), 67,9° (d=1,60 Å). Ces valeurs de $2\theta$ sont d'ailleurs données dans la fiche ASTM 10-173 de l'alumine alpha, à laquelle on pourra se référer pour plus de détails. Le taux d'alumine alpha dépend essentiellement de la température de calcination. Il peut dépendre également dans une moindre mesure d'additifs de calcination couramment utilisés, tel que le fluor.

En particulier, les alumines présentant le taux d'alumine alpha souhaité et une surface spécifique élevée peuvent être obtenues en effectuant une calcination dans une gamme de températures allant de 900°C à 1300°C environ, pendant une durée de 10 minutes à 2 heures. Les alumines calcinées à des températures supérieures à 1300°C, notamment, pendant une durée supérieure à 30 minutes, présentent un taux d'alumine alpha supérieur.

L'alumine utilisée dans le cadre de l'invention présente un taux important d'alumine alpha, le reste étant constitué d'alumine également de formule $Al_2O_3$, mais sous forme amorphe ou sous une forme dite de transition présentant une autre structure cristalline ou faiblement cristallisée. Dans le cadre de l'invention, de manière avantageuse, l'alumine utilisée contient de 20 à 96% massique d'alumine $Al_2O_3$ alpha, de préférence de 50 à 90% massique, ces pourcentages massiques étant donnés par rapport à la masse totale de l'alumine utilisé. Avec de tels taux d'alumine alpha, l'aspect opaque obtenu pour le produit céramique fabriqué est très satisfaisant.

Le % massique en alumine alpha peut être déterminé par diffraction des rayons X. Ce dernier peut être obtenu à partir de l'aire des pics pour le plan réticulaire (002) de l'alumine alpha aux angles $2\theta = 29,8°$ et $2\theta = 67,9°$. En particulier, la méthode détaillée dans les exemples peut être utilisé.

L'effet opacifiant obtenu sur le produit céramique peut être évalué à partir des coordonnées chromatiques (L*, a*, b*) mesurées à l'aide d'un spectrophotomètre. De telles coordonnées chromatiques sont notamment définies dans la norme CIELAB (Commission Internationale de l'Eclairage, 1976) qui définit un modèle de représentation des couleurs par les coordonnées L*, a*, b*. L'effet opacifiant sera jugé satisfaisant, par exemple, si la valeur de L* est supérieure à 76 pour le produit céramique obtenu.

De manière préférentielle, les particules d'alumine $Al_2O_3$ utilisées présentent une surface spécifique mesurée sous azote par la technique BET de 1 à 80 m$^2$/g, de préférence de 3 à 15 m$^2$/g. Avec une telle surface spécifique pour l'alumine utilisé, les grains d'alumine sont finement divisés et dispersés dans la composition, ce qui favorise leur efficacité en tant qu'agent opacifiant, de plus la composition soumise à l'opération de frittage est plus facile à mettre en oeuvre. La technique de référence pour la mesure de la surface spécifique est celle décrite dans la norme NF X 11621.

Dans le cadre de l'invention, il peut également être avantageux que l'alumine puisse être substituée au zircon, dans les compositions existantes connues de l'art antérieur et soumises à une opération de frittage pour la fabrication de produits céramiques, sans modification de la température de frittage notamment. Ceci est notamment possible, lorsque le D90 des particules d'alumine utilisées, obtenu à partir de la distribution granulométrique en volume des particules par diffraction laser avec utilisation de la théorie de Mie, est inférieur à 45 $\mu$m. Le D50 est, quant à lui, de préférence, inférieur à 10 $\mu$m. La distribution granulométrique peut être obtenue à partir d'une suspension dans l'eau distillée contenant 1% en volume d'un agent dispersant tel qu'un copolymère acrylique (par exemple le Coatex GX) et une quantité d'alumine permettant d'obtenir un taux d'obscuration de 5 à 15 %, la solution étant soumise à un traitement aux ultrasons pour obtenir une dispersion satisfaisante. Les indices de réfraction suivants peuvent être appliqués : un indice de réfraction pour le milieu dispersant de 1,33, pour l'alumine de 1,760, et un indice imaginaire de 0,1. On pourra, par exemple, utiliser un appareil Malvern Mastersizer S, équipé d'un laser He-Ne à 632.8 nm. Pour plus de détails, on pourra se référer à la technique détaillée dans les exemples.

De manière préférée, on utilisera une poudre d'alumine dont le D90 est inférieur à 25 $\mu$m. Le D50 est, quant à lui, de préférence inférieur à 5 $\mu$m.

Pour obtenir de telles tailles de particules, l'alumine utilisée dans le cadre de l'invention pourra être obtenue par des opérations de broyage et de tamisage, selon toute technique classique connue de l'homme de l'art.

L'invention trouve en particulier application pour la fabrication de carrelages, d'éléments sanitaires du type lavabo, baignoire, toilette, ou de céramiques de table, du type vaisselle, plat .... En particulier, l'invention est particulièrement adaptée aux carrelages choisis parmi les grès, les grès porcelainés et les porcellanatos. L'utilisation de l'alumine décrite dans le cadre de l'invention est, notamment, adaptée pour les carreaux de sol et d'application murale.

Les particules d'alumine $Al_2O_3$ peuvent être utilisées, pour obtenir un effet opacifiant, dans la masse de carrelages. Dans ce cas, les particules d'alumine $Al_2O_3$ utilisées sont, le plus souvent, en mélange, dans la composition soumise à une opération de frittage pour la fabrication de la masse de carrelages, avec de l'argile, du feldspath et du quartz. L'effet opacifiant étant très souvent recherché pour des carrelages clairs ou blancs, en plus de l'argile, du feldspath et du quartz, la composition soumise à une opération de frittage pour la fabrication de la masse de carrelages peut également contenir du Kaolin.

Typiquement de telles compositions comprennent de 30 à 40 % d'argile, de 45 à 60 % de feldspath, de 3 à 15 % de quartz et de 5 à 20 % de kaolin, en % massique exprimés par rapport à la masse totale de la composition.

Dans le cadre de l'invention, les particules d'alumine $Al_2O_3$ peuvent également être utilisées, pour obtenir un effet opacifiant dans l'engobe de carrelages et/ou dans l'émail de carrelages. Dans ce cas, les particules d'alumine $Al_2O_3$ utilisées sont en mélange, dans la composition soumise à une opération de frittage pour la fabrication de l'engobe de carrelages et/ou dans l'émail de carrelages, avec de l'argile, du feldspath, de la fritte de verre et du Kaolin. La fritte de verre contient typiquement un mélange de $SiO_2$, $B_2O_3$, $Al_2O_3$, CaO, MgO, ZnO et $ZrO_2$.

De manière avantageuse dans le cadre de l'invention, les particules d'alumine utilisées pour obtenir un effet opacifiant représentent plus de 5 % en masse de la composition soumise à une opération de frittage, typiquement de 5 à 15% en masse de la composition. A titre de comparaison, dans les carrelages de l'art antérieur, on utilise classiquement dans les compositions soumises au frittage, un agent opacifiant (qui est le plus souvent constitué exclusivement de zircon) à raison de 3 à 15 % en masse.

Il a également été constaté qu'il était préférable que la composition soumise à une opération de frittage contienne une masse en particules d'alumine supérieure d'au moins 50% à la masse de zircon utilisée dans les techniques antérieures, dans le cas de la fabrication de carrelages et, en particulier, des masses de carrelage.

Les solutions les plus économiques utilisent une composition, qui va être soumise à une opération de frittage pour la fabrication du produit céramique, qui contient moins de 0,5 % en masse de zircon $ZrSiO_4$, en % massique exprimé par rapport à la masse totale de la composition et, de préférence, qui ne contient pas du tout de zircon.

Selon une variante de mise en oeuvre de l'invention, les particules d'alumine $Al_2O_3$ utilisées pour obtenir un effet opacifiant sont mélangées avec un pigment blanc choisi parmi $TiO_2$, ZnO, le zircon ($ZrSiO_4$) et $ZrO_2$, préalablement à leur incorporation dans la composition soumise à une opération de frittage lors de la fabrication du produit céramique. Pour cela, l'alumine et le pigment blanc peuvent être soumis à une étape de cobroyage, qui permet d'obtenir un mélange intime. Une telle variante est particulièrement adaptée lorsque les particules d'alumine $Al_2O_3$ sont utilisées, pour obtenir un effet opacifiant, dans l'engobe de carrelages et/ou dans l'émail de carrelages ou d'autres émaux céramiques. De manière avantageuse, les particules d'alumine $Al_2O_3$ utilisées pour obtenir un effet opacifiant sont mélangées avec du $TiO_2$ avec un taux massique $TiO_2$/alumine de 0,05 à 5%, préalablement à leur incorporation dans la composition soumise à une opération de frittage lors de la fabrication du produit céramique.

Selon une autre variante de mise en oeuvre de l'invention pouvant être combinée aux précédentes, les particules d'alumine $Al_2O_3$ utilisées pour obtenir un effet opacifiant sont en mélange, dans la composition soumise à l'opération de frittage, avec un agent dispersant organique, par exemple choisi parmi les polyacryliques, les polyacrylates et polyméthacrylates d'ammonium ou de sodium, les oléates de glycérol, les polyéthylèneimines, les esters phosphoriques, les huiles de poisson, les tripolyphosphates et métasilicates d'ammonium ou de sodium. De préférence, on utilise des tripolyphosphates de sodium et/ou des métasilicates de sodium. Les particules d'alumine peuvent être mélangées avec un tel agent dispersant préalablement à leur incorporation dans la composition soumise à une opération de frittage lors de la fabrication du produit céramique.

Dans le cas de la fabrication de carrelage, la mise en oeuvre de particules d'alumine décrite dans le cadre de l'invention peut être utilisée, pour obtenir un effet opacifiant, uniquement dans la masse, ou uniquement dans l'engobe et/ou l'émail de carrelages ou à la fois dans la masse, dans l'émail et dans l'engobe desdits carrelages.

En général, la composition contenant l'alumine décrite dans le cadre de l'invention est soumise à une opération de frittage réalisée à une température appartenant à la gamme allant de 950 à 1250°C. De manière classique, une telle opération est effectuée après montée progressive en température par traitement thermique sous air à une température de frittage sélectionnée, notamment pendant une durée de 5 minutes à 2 heures, la durée étant notamment fonction de l'épaisseur du produit céramique consolidé.

La composition peut être préparée sous la forme d'une suspension aqueuse, qui pourra être atomisée et compactée dans le cas de la fabrication de produits massiques de type carrelage, ou étalée sur un support dans le cas de la fabrication d'engobes ou d'émaux, avant l'opération de frittage.

Les exemples ci-après permettent d'illustrer l'invention mais n'ont aucun caractère limitatif.

## Méthodes de caractérisation

### I. Mesure du taux de phase alpha par diffraction des rayons X

Principe : mesure de l'intensité nette intégrée du faisceau de rayons X, diffractée par le plan réticulaire (002) de l'alumine alpha aux angles $2\theta = 29,8°$ et $2\theta = 67,9°$.

Dans la méthode sélectionnée, le taux de phase alpha est déterminé par rapport à une courbe d'étalonnage sur 6 points. Il a été choisi de construire une courbe d'étalonnage avec des mélanges d'alumine 100% alpha avec de l'hydrate d'alumine à différentes teneur. La teneur en phase alpha est exprimée en % masse, et est donnée par la formule :

$$\text{Taux alpha} = a \times Sn + b$$

Où Sn est l'aire du pic de diffraction, dans la plage $2\theta = 29,36\text{-}30,18$ et $2\theta = 67,32 - 68,55$.

a est la pente de la courbe d'étalonnage
b est l'ordonnée à l'origine

La teneur en phase alpha correspond à la moyenne des deux calculs.

Appareillage : diffractomètre des rayons X Philips modèle X' Pert MPD équipé d'un tube de rayons X, possédant une anticathode au cobalt émettant une radiation de longueur d'onde $K\alpha = 1,7889$ Å.

### II. Mesure de surface spécifique par la méthode BET

Principe général : méthode BET (Brunaure, Emett, Teller). Norme de référence : NF X 11621.

Les échantillons sont dégazés sous pression réduite à 200°C. La durée de dégazage de l'échantillon est fixée jusqu'à ce que la pression réduite mesurée soit inférieure ou égale à 50 mTorr.

L'appareil utilisé est un MICROMERITICS TRISTAR 3000, entièrement automatique. Le réactif utilisé est l'azote. La quantité de poudre introduite est d'environ 2 g, et est mesurée à l'aide d'une balance de précision.

### III. Mesure de la distribution granulométrique par diffraction laser

Appareillage : Malvern Mastersizer S, équipé d'un laser He-Ne à 632.8 nm

Paramètres d'utilisation :

- voie humide (eau distillée)
- vitesse de pompe et vitesse d'agitation : fixées à 70% de l'échelle
- aide à la dispersion : ajout de dispersant Coatex GX (copolymère acrylique) à 1% en volume dans l'eau distillée + ultrasons (100% de la puissance, durée 30 secondes)
- temps de mesure : 30000 balayages
- obscuration de 5 à 15%
- modèle optique : modèle mathématique intégré à l'appareil, selon la théorie de Mie, avec un indice de réfraction du milieu dispersant de 1,33, pour l'alumine de 1,760, indice imaginaire 0,1.

Expression des résultats : les % sont des % en volume

D10<X µm : indique que 10% des particules ont un diamètre inférieur à X µm
D50<Y µm : indique que 50% des particules ont un diamètre inférieur à Y µm
D90<Z µm : indique que 90% des particules ont un diamètre inférieur à Z µm

IV. <u>Mesures chromatiques</u>

Ces mesures sont réalisées à l'aide d'un spectrophotomètre, de marque Minolta CM 3610D.

**<u>Produits utilisés</u>**

Alumine A: commercialisée par la société Rio Tinto Alcan sous la référence AC 34
Alumine B : commercialisée par la société Rio Tinto Alcan sous la référence AC 44
Alumine C : synthétisée par calcination d'hydrate d'alumine à 1150°C, palier de 30 minutes, sans additif
Alumine D : commercialisée par la société Rio Tinto Alcan sous la référence AR 75

Argile « argile d'ukraine » fournie par la société Imerys
Feldspath « feldspath flotté turc » fourni par la société Esan
Kaolin fourni par la société Imerys
Zircon (pour les essais comparatifs) fourni par la société Endeka

**<u>Masse/carreau :</u>**

<u>Exemples de réalisation 1 :</u>

Différentes alumines ayant subi différentes calcinations ont été testées. Leurs caractéristiques sont présentées dans le **TABLEAU 1** ci-dessous.

**TABLEAU 1**

| Alumine | Degré de calcination | Taux d'$Al_2O_3$ alpha (%) | Surface spécifique ($m^2/g$) | D50 (µm) |
|---|---|---|---|---|
| A | Très élevé | $\geq 96$ | 0,6 | 75 |
| B | Très élevé | $\geq 96$ | 0,6 | 45 |
| C | Bas | 80 | 8 | 45 |
| D | Très bas | 25 | 75 | 75 |

*Composition en % massique de la masse du carreau utilisée :*

Argile : 30 %
Feldspath : 50 %
Kaolin : 15 %
Agent opacifiant (Alumine ou Zircon pour les essais comparatifs) : 5%

*Procédé de fabrication :*

Les matières premières argile et kaolin sont mélangées dans un broyeur à bille planétaire jusqu'à ce que le mélange passe à travers un tamis de 1 mm de maille.
Ensuite, toutes les matières premières sauf l'agent opacifiant, ainsi que les dispersants, sont mélangées dans les bonnes proportions, dans l'eau distillée (50% de matière sèche) dans une jarre tournante contenant des billes d'alumine, jusqu'à atteindre un refus maximum de 1% au tamis de 40 μm. 1 minute avant la fin du broyage, l'agent opacifiant (alumine ou zircon) est ajouté. Le dispersant est un mélange à 25% en masse de sodium tripolyphosphate et 75% en masse de sodium metasilicate préparé dans l'eau à 70% de matière sèche, introduit à 0,3% massique par rapport au total de matière minérale. A ce stade, on mesure la viscosité de la suspension. La viscosité est mesurée à l'aide d'un viscosimètre Gallenkamp. Des courbes de défloculation sont tracées par mesure de viscosité en introduisant différents taux d'un mélange de dispersant (25% tripolyphosphate de sodium et 75% metasilicate de sodium).

La suspension est séchée. La poudre est ensuite pressée, de manière à atteindre une densité à cru d'environ 1,9 g/cm3.

Puis, les carreaux sont frittés dans un four statique électrique à une vitesse de montée en température de 25°C/min, à une température de frittage différente dans chaque cas et maintenue pendant 6 minutes. La température de frittage optimale correspond à la densité maximale. Un balayage de température couplé à des mesures de densité donne les températures optimales suivantes présentées dans le **TABLEAU 2** :

**TABLEAU 2 :**

| Poudre | A | B | C | D | Zircon |
|---|---|---|---|---|---|
| Température (°C) | 1219 | 1219 | 1222 | 1226 | 1215 |

Des mesures de coordonnées chromatiques sont réalisées sur les carreaux élaborés dans ces conditions.

L'efficacité de l'opacifiant est déterminée par les coordonnées chromatiques (L*, a*, b*) mesurées à l'aide d'un spectrophotomètre, sur le carreau fini.

*Résultats :*

- Les alumines A et B de type très calcinées n'apportent pas d'effet opacifiant suffisant pour concurrencer le zircon.
- L'alumine D est satisfaisante pour son apport opacifiant mais présente des difficultés de mise en oeuvre, le comportement rhéologique de la suspension étant très différent et problématique. Elle pose également des problèmes de pressage. Ceci est probablement lié à sa très forte surface spécifique.
- L'alumine C apporte un effet opacifiant comparable au zircon, tout en ayant des comportements de mise en oeuvre proches, elle correspond donc à un choix optimum. Son effet opacifiant élevé est sans doute dû à une bonne dispersion de particules fines.

*Effets secondaires identifiés :*

Le remplacement du zircon par l'alumine entraine une modification de la température de cuisson qui est plus élevée, ce phénomène étant dû à la plus grande réfractarité de l'alumine. Dans l'exemple 2, une étude a été menée pour tenter d'éviter une telle modification car une modification de la température de cuisson pour un fabriquant de produit céramique peut engendrer des modifications de caractéristiques des carreaux, de l'engobe et de l'émail, et peut également provoquer des problèmes de compatibilité. Par exemple, il peut être difficile de maitriser la planéité des carreaux si l'on change la température de cuisson. La mise au point de l'ensemble carreau/engobe/émail étant très complexe, il est critique de maintenir au plus près la température de cuisson lorsque l'on substitue le zircon par de l'alumine pour éviter d'avoir à modifier les composants et ratios utilisés dans la composition, notamment. De plus, une modification de la température de cuisson peut conduire à une densité après cuisson plus basse correspondant à une porosité plus élevée, ce qui peut poser des problèmes de perméabilité et de résistance aux taches.

Exemples de réalisation 2 :

Plusieurs poudres d'alumine de type C présentant différents degrés de broyage, et donc une distribution de taille granulométrique (en μm) différente, ont été comparées. Le **TABLEAU** 3 présente les valeurs de D10, D50, D90 et D97 obtenues dans chaque cas.

**TABLEAU 3 :**

| | D10 | D50 | D90 | D97 |
|---|---|---|---|---|
| **C1** | 18,4 | 44,5 | 85,3 | 110,0 |

(suite)

|  | D10 | D50 | D90 | D97 |
|---|---|---|---|---|
| **C2** | 0,6 | 5,0 | 42,2 | 63,0 |
| **C3** | 0,2 | 1,2 | 10,4 | 20,0 |
| **C4** | 0,4 | 1,4 | 3,2 | 4,5 |
| **C5** | 0,4 | 1,3 | 3,3 | 4,5 |
| **C6** | 0,2 | 0,4 | 0,9 | 1,6 |
| **ZIRCON** | 0,2 | 1,9 | 12,5 | 22,0 |

Composition pour la masse du carreau utilisée :

- Avec utilisation du zircon en tant qu'agent opacifiant (essai comparatif) : même composition qu'à l'exemple 1,
- Avec utilisation de l'alumine en tant qu'agent opacifiant : composition en pourcentage massique

Argile : 29,2 %
Feldspath : 48,7 %
Kaolin : 14,6 %
Alumine : 7,5%

Procédé de fabrication : identique à celui de l'exemple 1, avec utilisation des températures de frittage optimales suivantes présentées dans le **TABLEAU 4**.

**TABLEAU 4**

| Poudre | Température (°C) |
|---|---|
| **C1** | 1225 |
| **C2** | 1216 |
| **C3** | 1207 |
| **C4** | 1207 |
| **C5** | 1208 |
| **C6** | 1208 |
| **ZIRCON** | 1208 |

Les résultats obtenus montrent que :

- la température de cuisson utilisée qui permet d'obtenir la densité maximale, et donc la porosité minimale, est directement liée à la taille granulométrique de la poudre,
- le point critique est de limiter les plus grosses particules (D90 et D97 bas), qui provoquent des gros pores à l'issue du pressage, qui sont difficilement éliminés pendant la cuisson.

**Engobe et Email**

Exemples de réalisation 1 :

Différentes alumines utilisées précédemment pour la préparation de masse de carrelage et ayant subi différentes calcinations, dont les caractéristiques sont rappelées dans le **TABLEAU 5** ci-après, ont été testées.

**TABLEAU 5**

| Alumine | Degré de calcination | Taux d'$Al_2O_3$ alpha (%) | Surface spécifique ($m^2$/g) | D50 ($\mu$m) |
|---|---|---|---|---|
| A | Très élevé | >95 | 0,6 | 75 |
| B | Très élevé | >95 | 0,6 | 45 |

(suite)

| Alumine | Degré de calcination | Taux d'Al$_2$O$_3$ alpha (%) | Surface spécifique (m$^2$/g) | D50 ($\mu$m) |
|---|---|---|---|---|
| C | Bas | 80 | 8 | 45 |
| D | Très bas | 25 | 75 | 75 |

*Procédé d'élaboration :*

Une suspension est préparée par broyage humide à 70% de matière sèche dans 30% d'eau (pourcentage massique par rapport à la masse totale de la suspension), dans une jarre tournant contenant des billes d'alumine. Le temps de broyage est fixé de manière à atteindre 1 % au maximum de refus au tamis de 40 $\mu$m.

Composition en pourcentage massique par rapport au taux de matière sèche total de la composition (les dispersants étant des matières organiques qui disparaissent à la cuisson, la composition en matières minérales correspond à 100% et le taux de dispersant est exprimé par rapport à la masse totale de de matières minérales) :

- 80% de fritte transparente
- 7% de kaolin
- 13% alumine
- 0,3% (massique par rapport au taux de matières minérales) de sodium carboxyméthylcellulose
- 0,3% (massique par rapport au taux de matières minérales) de sodium tripolyphosphate

La fritte de verre utilisée contient en pourcentages massiques 58,1% SiO$_2$, 8,1% Al$_2$O$_3$, 8,6% B$_2$O$_3$, 7,5% CaO, 2,7% MgO, 4,7% Na$_2$O, 3,1% K$_2$O, 6,45% ZrO$_2$ et 0,15% ZnO pour principaux constituants.

La suspension est déposée sur un carreau support cru (donc poreux), à l'aide d'une racle réglée pour déposer 500 $\mu$m d'épaisseur. Puis, l'échantillon est séché dans un four électrique à 110°C, puis fritté à la température désirée, avec une montée en température à une vitesse de 25°C/min, et un palier de 6 minutes à la température finale sélectionnée. Les températures de cuisson testées sont 1080, 1100, 1120, et 1140°C, respectivement dans le cas des alumines A, B, C et D testées.

*Résultats :*

- le pouvoir opacifiant des alumines A et B est trop faible pour concurrencer le zircon,
- l'alumine D permet d'obtenir un effet opacifiant meilleur que les alumines A et B, mais engendre un émail poreux, et d'apparence très mate,
- l'alumine C présente de bons résultats en termes d'effet opacifiant, et constitue le meilleur compromis.

*Effets secondaires identifiés :*

La couleur blanche obtenue est plus « froide » qu'avec le zircon, c'est-à-dire légèrement bleutée, alors que le zircon donne une couleur plus chaude, dans les jaunes.

Exemples de réalisation 2 :

L'utilisation de l'alumine C, est comparée avec une alumine C' préparée par cobroyage de l'alumine C avec ajout de 0,35% (en pourcentage massique par rapport au taux de matière sèche total de la composition) en masse de TiO$_2$.

*Résultats :*

L'effet opacifiant obtenu est le même dans les deux cas. Par contre, la couleur blanche obtenue correspond mieux à celle obtenue avec le zircon, dans le cas de l'utilisation de l'alumine C'.

**Revendications**

1. Utilisation dans la composition soumise à une opération de frittage pour la fabrication d'un produit céramique, de particules d'alumine $Al_2O_3$, pour obtenir un effet opacifiant dans ledit produit céramique, **caractérisée en ce que** les particules d'alumine $Al_2O_3$ utilisées présentent un % massique en alumine alpha inférieur ou égal à 96% et une surface spécifique mesurée sous azote par la technique Brunauer, Emmett et Teller (BET) supérieure ou égale à 1 m2/g.

2. Utilisation selon la revendication 1 **caractérisée en ce que** les particules d'alumine sont utilisées pour obtenir un effet opacifiant sur le produit céramique obtenu, correspondant à une valeur de L* définie dans la norme CIELAB (Commission Internationale de l'Eclairage, 1976) supérieure à 76.

3. Utilisation selon l'une des revendications précédentes **caractérisée en ce que** l'alumine $Al_2O_3$ utilisée contient de 20 à 96 % massique, de préférence de 50 à 90 % massique d'alumine alpha.

4. Utilisation selon l'une des revendications précédentes **caractérisée en ce que** les particules d'alumine $Al_2O_3$ utilisées présentent une surface spécifique mesurée sous azote par la technique BET de 1 à 80 m2/g, de préférence de 3 à 15 m2/g.

5. Utilisation selon l'une des revendications précédentes **caractérisée en ce que** le D90 des particules d'alumine utilisées, obtenu à partir de la distribution granulométrique en volume des particules par diffraction laser avec utilisation de la théorie de Mie, est inférieur à 45 $\mu$m.

6. Utilisation selon l'une des revendications précédentes **caractérisée en ce que** le D50 des particules d'alumine utilisées, obtenu à partir de la distribution granulométrique en volume des particules par diffraction laser avec utilisation de la théorie de Mie, est inférieur à 10 $\mu$m.

7. Utilisation selon les revendications 5 et 6 **caractérisée en ce que** le D90 est inférieur à 25 $\mu$m et le D50 est inférieur à 5 $\mu$m.

8. Utilisation selon l'une des revendications précédentes **caractérisée en ce que** lesdits produits céramiques sont choisis parmi les carrelages, les éléments sanitaires et les céramiques de table.

9. Utilisation selon l'une des revendications précédentes **caractérisée en ce que** lesdits produits céramiques sont des carrelages choisis parmi les grès, les grès porcelainés et les porcellanatos.

10. Utilisation selon l'une des revendications précédentes **caractérisée en ce que** les particules d'alumine $Al_2O_3$ sont utilisées, pour obtenir un effet opacifiant, dans la masse de carrelages.

11. Utilisation selon l'une des revendications précédentes **caractérisée en ce que** les particules d'alumine $Al_2O_3$ utilisées sont en mélange, dans la composition soumise à une opération de frittage pour la fabrication de la masse de carrelages, avec de l'argile, du feldspath et du quartz.

12. Utilisation selon l'une des revendications précédentes **caractérisée en ce que** les particules d'alumine $Al_2O_3$ utilisées sont en mélange, dans la composition soumise à une opération de frittage pour la fabrication de la masse de carrelages, avec de l'argile, du feldspath, du quartz et du Kaolin.

13. Utilisation selon la revendication 12 précédente **caractérisée en ce que** la composition comprend de 30 à 40 % d'argile, de 45 à 60 % de feldspath, de 3 à 15 % de quartz et de 5 à 20 % de kaolin, en % massique exprimés par rapport à la masse totale de la composition.

14. Utilisation selon l'une des revendications précédentes **caractérisée en ce que** les particules d'alumine $Al_2O_3$ sont utilisées, pour obtenir un effet opacifiant, dans l'engobe de carrelages et/ou dans l'émail de carrelages.

15. Utilisation selon la revendication 14 **caractérisée en ce que** les particules d'alumine $Al_2O_3$ utilisées sont en mélange, dans la composition soumise à une opération de frittage pour la fabrication de l'engobe de carrelages et/ou de l'émail de carrelages, avec de l'argile, du feldspath, de la fritte de verre et du Kaolin.

**16.** Utilisation selon l'une des revendications précédentes, **caractérisée en ce que** les particules d'alumine utilisées représentent plus de 5 % en masse de la composition soumise à une opération de frittage, typiquement de 5 à 15% en masse de la composition.

**17.** Utilisation selon l'une des revendications précédentes **caractérisée en ce que** les particules d'alumine utilisées pour obtenir un effet opacifiant sont mélangées avec un pigment blanc choisi parmi $TiO_2$, ZnO, le zircon ($ZrSiO_4$) et $ZrO_2$, préalablement à leur incorporation dans la composition soumise à une opération de frittage lors de la fabrication du produit céramique.

**18.** Utilisation selon l'une des revendications précédentes **caractérisée en ce que** les particules d'alumine utilisées pour obtenir un effet opacifiant sont mélangées avec du $TiO_2$ avec un taux massique $TiO_2$/alumine de 0,05% à 5%, préalablement à leur incorporation dans la composition soumise à une opération de frittage lors de la fabrication du produit céramique.

**19.** Utilisation selon l'une des revendications précédentes **caractérisée en ce que** les particules d'alumine $Al_2O_3$ utilisées pour obtenir un effet opacifiant sont mélangées, avec un agent dispersant organique choisi parmi les polyacryliques, les polyacrylates et polyméthacrylates d'ammonium ou de sodium, les oléates de glycérol, les polyéthylèneimines, les esters phosphoriques, les huiles de poisson, les tripolyphosphates et métasilicates d'ammonium ou de sodium, et de préférence choisi parmi les tripolyphosphates de sodium et/ou les métasilicates de sodium.

**20.** Utilisation selon la revendication 19 **caractérisée** en ce les particules d'alumine sont mélangées avec l'agent dispersant organique préalablement à leur incorporation dans la composition soumise à une opération de frittage lors de la fabrication du produit céramique.

**21.** Utilisation selon l'une des revendications précédentes **caractérisée en ce que** les particules d'alumine $Al_2O_3$ sont utilisées, pour obtenir un effet opacifiant, à la fois dans la masse, dans l'émail et dans l'engobe de carrelages.

**22.** Utilisation selon l'une des revendications précédentes **caractérisée en ce que** la composition soumise à une opération de frittage pour la fabrication du produit céramique contient moins de 0,5% en masse de zircon $ZrSiO_4$, en pourcentage massique exprimé par rapport à la masse totale de la composition.

**23.** Utilisation selon l'une des revendications précédentes **caractérisée en ce que** la composition soumise à une opération de frittage pour la fabrication du produit céramique ne contient pas de zircon $ZrSiO_4$.

**24.** Utilisation selon l'une des revendications précédentes **caractérisée en ce que** l'opération de frittage est réalisée à une température appartenant à la gamme allant de 950 à 1250°C.

**25.** Utilisation selon l'une des revendications précédentes **caractérisée en ce que** les particules d'alumine $Al_2O_3$ utilisées sont constituées d'un mélange l'alumine alpha et d'alumine sous forme amorphe ou sous une forme dite de transition présentant une autre structure cristalline ou plus faiblement cristallisée.

**Patentansprüche**

**1.** Verwendung von Partikeln aus Aluminiumoxid $Al_2O_3$ in der einem Sintervorgang unterworfenen Zusammensetzung zur Herstellung eines Keramikprodukts, um eine Trübungswirkung in dem Keramikprodukt zu erhalten, **dadurch gekennzeichnet, dass** die verwendeten Partikel aus Aluminiumoxid $Al_2O_3$ einen Massenprozentanteil an alpha-Aluminiumoxid von weniger als oder gleich 96 % und eine spezifischen Oberfläche aufweisen, die unter Stickstoff nach der Methode von Brunauer, Emmett und Teller (BET) gemessen wird, die größer oder gleich 1 $m^2$/g ist.

**2.** Verwendung nach Anspruch 1, **dadurch gekennzeichnet, dass** die Aluminiumoxidpartikel verwendet werden, um eine Trübungswirkung auf dem erhaltenen Keramikprodukt zu erhalten, die einem in der Norm CIELAB (Internationale Beleuchtungskommission, 1976) definierten Wert von L* von über 76 entspricht.

**3.** Verwendung nach einem der vorhergehenden Ansprüche, **dadurch gekennzeichnet, dass** das verwendete Aluminiumoxid $Al_2O_3$ 20 bis 96 Ma %, vorzugsweise 50 bis 90 Ma % alpha-Aluminiumoxid umfasst.

**4.** Verwendung nach einem der vorhergehenden Ansprüche, **dadurch gekennzeichnet, dass** die verwendeten Par-

tikel aus Aluminiumoxid $Al_2O_3$ eine spezifische Oberfläche, die unter Stickstoff nach der BET-Methode gemessen wird, von 1 bis 80 m$^2$/g, vorzugsweise von 3 bis 15 m$^2$/g aufweisen.

5. Verwendung nach einem der vorhergehenden Ansprüche, **dadurch gekennzeichnet, dass** der D90-Wert der verwendeten Partikel aus Aluminiumoxid $Al_2O_3$, der aus der volumenbasierten Partikelgrößenverteilung durch Laserbeugung nach der Mie-Theorie erhalten wird, niedriger als 45 $\mu$m ist.

6. Verwendung nach einem der vorhergehenden Ansprüche, **dadurch gekennzeichnet, dass** der D50-Wert der verwendeten Partikel aus Aluminiumoxid, der aus der volumenbasierten Partikelgrößenverteilung durch Laserbeugung nach der Mie-Theorie erhalten wird, niedriger als 10 $\mu$m ist.

7. Verwendung nach den Ansprüchen 5 und 6, **dadurch gekennzeichnet, dass** der D90-Wert niedriger als 25 $\mu$m ist und der D50-Wert niedriger als 5 $\mu$m ist.

8. Verwendung nach einem der vorhergehenden Ansprüche, **dadurch gekennzeichnet, dass** die Keramikprodukte aus Fliesen, Sanitärelementen und Tischkeramik ausgewählt sind.

9. Verwendung nach einem der vorhergehenden Ansprüche, **dadurch gekennzeichnet, dass** die Keramikprodukte Fliesen sind, die aus Steingut, Steinzeug und Feinsteinzeug ausgewählt sind.

10. Verwendung nach einem der vorhergehenden Ansprüche, **dadurch gekennzeichnet, dass** die Partikel aus Aluminiumoxid $Al_2O_3$ verwendet werden, um in der Fliesenmasse eine Trübungswirkung zu erhalten.

11. Verwendung nach einem der vorhergehenden Ansprüche, **dadurch gekennzeichnet, dass** die verwendeten Partikel aus Aluminiumoxid $Al_2O_3$ in der einem Sintervorgang unterworfenen Zusammensetzung zur Herstellung der Keramikmasse in Mischung mit Ton, Feldspat und Quarz vorliegen.

12. Verwendung nach einem der vorhergehenden Ansprüche, **dadurch gekennzeichnet, dass** die verwendeten Partikel aus Aluminiumoxid $Al_2O_3$ in der einem Sintervorgang unterworfenen Zusammensetzung zur Herstellung der Keramikmasse in Mischung mit Ton, Feldspat, Quarz und Kaolin vorliegen.

13. Verwendung nach Anspruch 12, **dadurch gekennzeichnet, dass** die Zusammensetzung 30 bis 40 % Ton, 45 bis 60 % Feldspat, 3 bis 15 % Quarz und 5 bis 20 % Kaolin, ausgedrückt in Massenprozent in Bezug auf die Gesamtmasse der Zusammensetzung, umfasst.

14. Verwendung nach einem der vorhergehenden Ansprüche, **dadurch gekennzeichnet, dass** die Partikel aus Aluminiumoxid $Al_2O_3$ verwendet werden, um in der Engobe der Fliesen und/oder der Emaille der Fliesen eine Trübungswirkung zu erhalten.

15. Verwendung nach Anspruch 14, **dadurch gekennzeichnet, dass** die verwendeten Partikel aus Aluminiumoxid $Al_2O_3$ in der einem Sintervorgang unterworfenen Zusammensetzung zur Herstellung der Engobe der Fliesen und/oder der Emaille der Fliesen in Mischung mit Ton, Feldspat, Glasfritte und Kaolin vorliegen.

16. Verwendung nach einem der vorhergehenden Ansprüche, **dadurch gekennzeichnet, dass** die verwendeten Partikel aus Aluminiumoxid mehr als 5 Massen% der einem Sintervorgang unterworfenen Zusammensetzung, typischerweise 5 bis 15 Massen% der Zusammensetzung ausmachen.

17. Verwendung nach einem der vorhergehenden Ansprüche, **dadurch gekennzeichnet, dass** die Partikel aus Aluminiumoxid, die verwendet werden, um eine Trübungswirkung zu erhalten, vor ihrem Einbringen in die Zusammensetzung, die bei der Herstellung des Keramikprodukts einem Sintervorgang unterworfen wird, mit einem weißen Pigment, das aus $TiO_2$, ZnO, Zirkon ($ZrSiO_4$) und $ZrO_2$ ausgewählt wird, vermischt werden.

18. Verwendung nach einem der vorhergehenden Ansprüche, **dadurch gekennzeichnet, dass** die Partikel aus Aluminiumoxid, die verwendet werden, um eine Trübungswirkung zu erhalten, vor ihrem Einbringen in die Zusammensetzung, die bei der Herstellung des Keramikprodukts einem Sintervorgang unterworfen wird, mit $TiO_2$ mit einem Massengehalt an $TiO_2$/Aluminiumoxid von 0,05 % bis 5 % vermischt werden.

19. Verwendung nach einem der vorhergehenden Ansprüche, **dadurch gekennzeichnet, dass** die Partikel aus Alu-

miniumoxid $Al_2O_3$, die verwendet werden, um eine Trübungswirkung zu erhalten, mit einem organischem Dispersionsmittel vermischt werden, das aus Polyacrylen, Polyacrylaten und Polymethacrylaten von Ammonium oder Natrium, Glycerololeaten, Polyethyleniminen, Phosphorsäureestern, Fischölen, Tripolyphosphaten und Metasilicaten von Ammonium oder Natrium ausgewählt wird und vorzugsweise aus Natriumtripolyphosphaten und/oder Natriummetasilicaten ausgewählt wird.

20. Verwendung nach Anspruch 19, **dadurch gekennzeichnet, dass** die Partikel aus Aluminiumoxid vor ihrem Einbringen in die Zusammensetzung, die bei der Herstellung des Keramikprodukts einem Sintervorgang unterworfenen wird, mit dem organischen Dispersionsmittel vermischt werden.

21. Verwendung nach einem der vorhergehenden Ansprüche, **dadurch gekennzeichnet, dass** die Partikel aus Aluminiumoxid $Al_2O_3$ verwendet werden, um gleichzeitig in der Masse, in der Emaille und in der Engobe der Fliesen eine Trübungswirkung zu erhalten.

22. Verwendung nach einem der vorhergehenden Ansprüche, **dadurch gekennzeichnet, dass** die Zusammensetzung, die für die Herstellung des Keramikprodukts einem Sintervorgang unterworfenen wird, 0,5 Massen% Zirkon $ZrSiO_4$, in Massenprozent ausgedrückt in Bezug auf die Gesamtmasse der Zusammensetzung, umfasst.

23. Verwendung nach einem der vorhergehenden Ansprüche, **dadurch gekennzeichnet, dass** die Zusammensetzung, die für die Herstellung des Keramikprodukts einem Sintervorgang unterworfenen wird, kein Zirkon $ZrSiO_4$ umfasst.

24. Verwendung nach einem der vorhergehenden Ansprüche, **dadurch gekennzeichnet, dass** der Sintervorgang bei einer Temperatur in dem Bereich von 950 bis 1.250 °C durchgeführt wird,

25. Verwendung nach einem der vorhergehenden Ansprüche, **dadurch gekennzeichnet, dass** die verwendeten Partikel aus Aluminiumoxid $Al_2O_3$ aus einer Mischung aus alpha-Aluminiumoxid und Aluminiumoxid in amorpher Form oder in einer sogenannten Übergangsform bestehen, die eine andere oder schwächer kristallisierte Kristallstruktur aufweist.

**Claims**

1. Use of alumina $Al_2O_3$ particles, in the composition subjected to a sintering operation for the manufacture of a ceramic product, to obtain an opacifying effect in said ceramic product, **characterized in that** the alumina $Al_2O_3$ particles used exhibit a % by weight of $\alpha$-alumina of less than or equal to 96% and a specific surface, measured under nitrogen by the Brunauer, Emmett and Teller (BET) technique, of greater than or equal to 1 $m^2/g$.

2. Use according to Claim 1, **characterized in that** the alumina particles are used to obtain an opacifying effect on the ceramic product obtained, corresponding to a value of L*, defined in the CIELAB standard (Commission Internationale de l'Eclairage, 1976), of greater than 76.

3. Use according to either of the preceding claims, **characterized in that** the alumina $Al_2O_3$ used comprises from 20 to 96% by weight and preferably from 50 to 90% by weight of $\alpha$-alumina.

4. Use according to one of the preceding claims, **characterized in that** the alumina $Al_2O_3$ particles used exhibit a specific surface, measured under nitrogen by the BET technique, of 1 to 80 $m^2/g$ and preferably of 3 to 15 $m^2/g$.

5. Use according to one of the preceding claims, **characterized in that** the D90 of the alumina particles used, obtained from the volume particle size distribution of the particles by laser diffraction with use of the Mie theory, is less than 45 $\mu$m.

6. Use according to one of the preceding claims, **characterized in that** the D50 of the alumina particles used, obtained from the volume particles size distribution of the particles by laser diffraction with use of the Mie theory, is less than 10 $\mu$m.

7. Use according to Claims 5 and 6, **characterized in that** the D90 is less than 25 $\mu$m and the D50 is less than 5 $\mu$m.

8. Use according to one of the preceding claims, **characterized in that** said ceramic products are chosen from tilings, bathroom components and table ceramics.

9. Use according to one of the preceding claims, **characterized in that** said ceramic products are tilings chosen from stonewares, porcelain stonewares and porcellanatos.

10. Use according to one of the preceding claims, **characterized in that** the alumina $Al_2O_3$ particles are used to obtain an opacifying effect, in the body of tilings.

11. Use according to one of the preceding claims, **characterized in that** the alumina $Al_2O_3$ particles used are as a mixture, in the composition subjected to a sintering operation for the manufacture of the body of tilings, with clay, feldspar and quartz.

12. Use according to one of the preceding claims, **characterized in that** the alumina $Al_2O_3$ particles used are as a mixture, in the composition subjected to a sintering operation for the manufacture of the body of tilings, with clay, feldspar, quartz and kaolin.

13. Use according to the preceding Claim 12, **characterized in that** the composition comprises from 30 to 40% of clay, from 45 to 60% of feldspar, from 3 to 15% of quartz and from 5 to 20% of kaolin, as % by weight, expressed with respect to the total weight of the composition.

14. Use according to one of the preceding claims, **characterized in that** the alumina $Al_2O_3$ particles are used to obtain an opacifying effect, in the engobe of tilings and/or in the glaze of tilings.

15. Use according to Claim 14, **characterized in that** the alumina $Al_2O_3$ particles used are as a mixture, in the composition subjected to a sintering operation for the manufacture of the engobe of tilings and/or of the glaze of tilings, with clay, feldspar, glass frits and kaolin.

16. Use according to one of the preceding claims, **characterized in that** the alumina particles used represent more than 5% by weight of the composition subjected to a sintering operation, typically from 5 to 15% by weight of the composition.

17. Use according to one of the preceding claims, **characterized in that** the alumina particles used to obtain an opacifying effect are mixed with a white pigment chosen from $TiO_2$, $ZnO$, zircon ($ZrSiO_4$) and $ZrO_2$, prior to their incorporation in the composition subjected to a sintering operation during the manufacture of the ceramic product.

18. Use according to one of the preceding claims, **characterized in that** the alumina particles used to obtain an opacifying effect are mixed with $TiO_2$ with a $TiO_2$/alumina content by weight of 0.05% to 5%, prior to their incorporation in the composition subjected to a sintering operation during the manufacture of the ceramic product.

19. Use according to one of the preceding claims, **characterized in that** the alumina $Al_2O_3$ particles used to obtain an opacifying effect are mixed with an organic dispersing agent chosen from polyacrylics, ammonium or sodium polyacrylates and polymethacrylates, glycerol oleates, polyethyleneimines, phosphoric esters, fish oils, or ammonia or sodium tripolyphosphates and metasilicates, and preferably chosen from sodium tripolyphosphates and/or sodium metasilicates.

20. Use according to Claim 19, **characterized in that** the alumina particles are mixed with the organic dispersing agent, prior to their incorporation in the composition subjected to a sintering operation during the manufacture of the ceramic product.

21. Use according to one of the preceding claims, **characterized in that** the alumina $Al_2O_3$ particles are used to obtain an opacifying effect, simultaneously in the body, in the glaze and in the engobe of tilings.

22. Use according to one of the preceding claims, **characterized in that** the composition subjected to a sintering operation for the manufacture of the ceramic product comprises less than 0.5% by weight of zircon $ZrSiO_4$, as percentage by weight, expressed with respect to the total weight of the composition.

23. Use according to one of the preceding claims, **characterized in that** the composition subjected to a sintering operation for the manufacture of the ceramic product does not comprise zircon $ZrSiO_4$.

**24.** Use according to one of the preceding claims, **characterized in that** the sintering operation is carried out at a temperature belonging to the range extending from 950 to 1250°C.

**25.** Use according to one of the preceding claims, **characterized in that** the alumina $Al_2O_3$ particles used are composed of a mixture of $\alpha$-alumina and of alumina in the amorphous form or in a "transition" form exhibiting another crystal or more weakly crystalline structure.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011030366 A
- US 2474636 A
- GB 1286003 A

**Littérature non-brevet citée dans la description**

- *Journal of the European Ceramic Society,* 2002, vol. 22 (5), 631-633
- *de Dyes and Pigments,* 2007, vol. 76 (1), 179-186
- Alumina Chemicals, Science & Technology Handbook. Mars 2006
- Les alumines et leurs applications. **B. CASTEL.** Aluminium Pechiney. Techno Nathan, 1990